# EUROPEAN PATENT APPLICATION

(11) **EP 4 708 349 A1**
(43) Date of publication of application: **11.03.2026**
(21) Application number: 25199711.0
(22) Date of filing: 02.09.2025
(51) Int. Cl.: H01H 71/08, H02B 1/21, H01R 25/16, H02G 5/00

(54) **BRIDGE SWITCH**

(30) Priority: 03.09.2024 TW 113133226
(71) Applicant: Taiwan Busway Co., Ltd., Taoyuan City 338 (TW)
(72) Inventor: CHEN, Min-Li, Taoyuan City (TW)
(74) Representative: Botti & Ferrari S.p.A.

(57) **Abstract**

The present invention provides a bridge switch. The bridge switch includes a first plug terminal, a second plug terminal and a switch component. The first plug terminal is configured to insert into a first busbar. The second plug terminal is configured to insert into a second busbar. The switch component has a first side electrically coupled to the first plug terminal, and a second side electrically coupled to the second plug terminal. Wherein the switch component includes a switch unit configured to control electrical conductivity between the first side and the second side.

## Description

### TECHNICAL FIELD

The present invention relates to a bridge switch; in particular, it relates to a bridge switch configured to be arranged between two busbars.

### BACKGROUND

Power distribution systems adopt copper strips or copper bars to connect power input ends and inside the distribution panel chassis. However, there are many restrictions on the use of the copper strips or the copper bars. For example, since copper strips and the copper bars are insulated from each other by air, in high-voltage applications, conventional power distribution systems require a large amount of space to isolate individual copper strips and copper bars. Due to space limitation, a larger chassis for the power distribution system or a large placement space is needed, resulting in high cost for the chassis or the placement space. Moreover, high demand for placement space also means elongation of the power transmission path, which also increases the cost of copper required for the power transmission. The elongation of the power transmission path also causes power loss during power transmission and generates heat. This poses significant limitations on the placement space and the ambient temperature of the power distribution systems.

On the other hand, since connections for power distribution systems are made by copper strips or copper bars, which require bending and stretching through processing, power transmission paths of distribution panel systems are mostly customized and cannot be easily changed. In other words, since copper strips or copper bars need to be processed and set up, their expandability and/or adjustability in the future is poor. To extend or adjust the configuration of the connections made by copper strips or copper bars, the original copper strips or copper bars will need to be replaced to achieve the purpose of adjustment or expansion. In addition, copper strips or copper bars used for high voltage construction environments must be powered off during the procedure of construction expansion or daily maintenance in order to ensure workers' safety. However, the cost for power outages is huge and unbearable for high-performance or high production capacity factories.

Although multiple sets of busbars installed outside the chassis of the power distribution system can be used to replace the copper bars or copper strips, thereby reducing the required space or material costs of the distribution panel system and improving its expandability and/or adjustability, the connection and management between multiple sets of busbars will be a problem for subsequent extension. For example, if multiple groups of busbars are directly connected, the power supply between the multiple groups of busbars cannot be controlled. In the event of a circuit break or instantaneous high current pulse, the backend circuit cannot be protected. On the other hand, when there is a malfunction or a need for replacement, the conventional arrangement cannot provide effective hot swapping, and the power must be cut off before construction.

In addition, a plug-in unit (PIU) of a busbar is used for power transmission between a busbar and an equipment. There is no means for quickly connecting two or more sets of busbars in a conventional power distribution system.

Accordingly, there are many issues that need to be overcome and solved in power distribution systems.

### SUMMARY

The present invention provides a bridge switch to effectively solve the problems encountered in previous technologies.

More specifically, one of the objectives of the present invention is to provide a bridge switch that can be connected between two busbars and control the conduction between the two busbars.

One of the objectives of the present invention is to provide a bridge switch that can be connected between two busbars and be replaced and adjusted without power interruption.

In a specific embodiment, the present invention provides a bridge switch. The bridge switch includes a first plug terminal, a second plug terminal and a switch component. The first plug terminal is configured to insert into a first busbar. The second plug terminal is configured to insert into a second busbar. The switch component has a first side electrically coupled to the first plug terminal, and a second side electrically coupled to the second plug terminal. Wherein the switch component includes a switch unit configured to control electrical conductivity between the first side and the second side.

In an embodiment, to control electrical conductivity between the first side and the second side, the switch unit is further configured to switch between a conductive state and a non-conductive state based on a control instruction.

In an embodiment, the switch component further includes a control unit electrically coupled to the switch unit and configured to provide the control instruction.

In an embodiment, the switch component further includes a communication unit coupled to the switch unit and configured to provide the control instruction through a wireless communication.

In an embodiment, the switch unit is selected from an air circuit breaker (ACB) or a molded case circuit breaker (MCCB).

In an embodiment, the bridge switch further includes a housing; wherein the switch component is arranged in the housing, and the first plug terminal and the second plug terminal are arranged outside a first surface of the housing.

In an embodiment, at least one guiding installation structure corresponding to the first busbar or the second busbar is formed on the first surface.

In an embodiment, the first plug terminal has a first phase power supply terminal, a second phase power supply terminal and a third phase power supply terminal; wherein the first phase power supply terminal is electrically coupled to the switch component through a first conducting path, the second phase power supply terminal is electrically coupled to the switch component through a second conducting path, and the third phase power supply terminal is electrically coupled to the switch component through a third conducting path.

In an embodiment, the switch component further includes an electric meter module electrically coupled to the switch component, and configured to present power information of the switch component.

In an embodiment, the switch component further includes at least one indicator module electrically coupled to the switch component, and configured to indicate whether the switch component received power from the first busbar.

In an embodiment, the first plug terminal is coupled to the first side of the switch component through at least one conducting sheet.

In an embodiment, the switch component further includes a sealing shell configured to cover the at least one conducting sheet.

In an embodiment, a solidified filler is arranged between the sealing shell and at least one conducting sheet.

In an embodiment, the switch component further includes a third plug terminal electrically coupled to the first side of the switch component, and configured to insert into the first busbar.

In an embodiment, the first plug terminal is configured to insert into the first busbar without powering off the first busbar.

In an embodiment, the first plug terminal has a weighing screw configured to adjust the spacing between the first plug terminal and the conducting sheet.

In summary, by connecting two or more busbars through the bridge switch of the present invention, it is possible to quickly and safely connect two or more sets of busbars. In addition, the bridge switch of the present invention is configured to be used as a circuit breaker or a circuit interruption node, which allows the busbar to set an interruption point or a safety node during power transmission to improve the overall safety of the circuit transmission. Therefore, the interruption point or the safety node will allow for hot swapping. Furthermore, the bridge switch is able to protect the equipment connected to the busbar through the interruption point or the safety node.

### BRIEF DESCRIPTION OF THE DRAWINGS

The accompanying drawings are presented to help describe various aspects of the present invention. In order to simplify the accompanying drawings and highlight the contents to be presented in the accompanying drawings, conventional structures or elements in the accompanying drawings may be drawn in a simple schematic way or may be omitted. For example, a number of elements may be singular or plural. These accompanying drawings are provided merely to explain these aspects and not to limit them.
FIGs. 1A and 1B are schematic diagrams of a bridge switch according to an embodiment of the present invention.
FIG. 1C is a schematic diagram of partially covered metal sheet in the bridge switch according to an embodiment of the present invention.
FIG. 2A is a block diagram of a switch component with a control unit according to an embodiment of the present invention.
FIG. 2B is a block diagram of a switch component with a communication unit according to one embodiment of the present invention.
FIGs. 3A and 3B are schematic diagrams of a bridge switch with a housing according to an embodiment of the present invention.
FIG. 4 is a schematic diagram of a guiding installation structure provided according to the housing in an embodiment of the present invention.
FIG. 5 is a schematic diagram of a bridge switch applied to three-phase electricity according to an embodiment of the present invention.
FIG. 6 is a schematic diagram of a bridge switch having an electric meter module and/or an indicator module according to an embodiment of the present invention.
FIG. 7 shows a schematic diagram of implementing a high-capacity bridge switch according to an embodiment of the present invention.

### DETAILED DESCRIPTION

Any reference to elements using terms such as "first" and "second" herein generally does not limit the number or order of these elements. Conversely, these names are used herein as a convenient way to distinguish two or more elements or element instances. Therefore, it should be understood that the terms "first" and "second" in the request item do not necessarily correspond to the same names in the written description. Furthermore, it should be understood that references to the first element and the second element do not indicate that only two elements can be used or that the first element needs to precede the second element. Open terms such as "include", "include", "have", "contain", and the like used herein means including but not limit to.

The term "coupled" is used herein to refer to direct or indirect electrical coupling between two structures. For example, in an example of indirect electrical coupling, one structure may be coupled with another structure through a passive element such as a resistor, a capacitor, or an inductor.

In the present invention, the term such as "exemplary" or "for example" is used to represent "giving an example, instance, or description". Any implementation or aspect described herein as "exemplary" or "for example" is not necessarily to be construed as preferred or advantageous over other aspects of the present invention. The terms "about" and "approximately" as used herein with respect to a specified value or characteristic are intended to represent within a value (for example, 10%) of the specified value or characteristic.

One specific embodiment of the present invention is a bridge switch. The bridge switch includes a first plug terminal, a second plug terminal, and a switch component. The bridge switch connects two busbars facing each other. The bridge switch is configured to quickly switch the conductivity between the two busbars. In addition, the bridge switch has a plug-in design that can be replaced or adjusted without powering off the busbars.

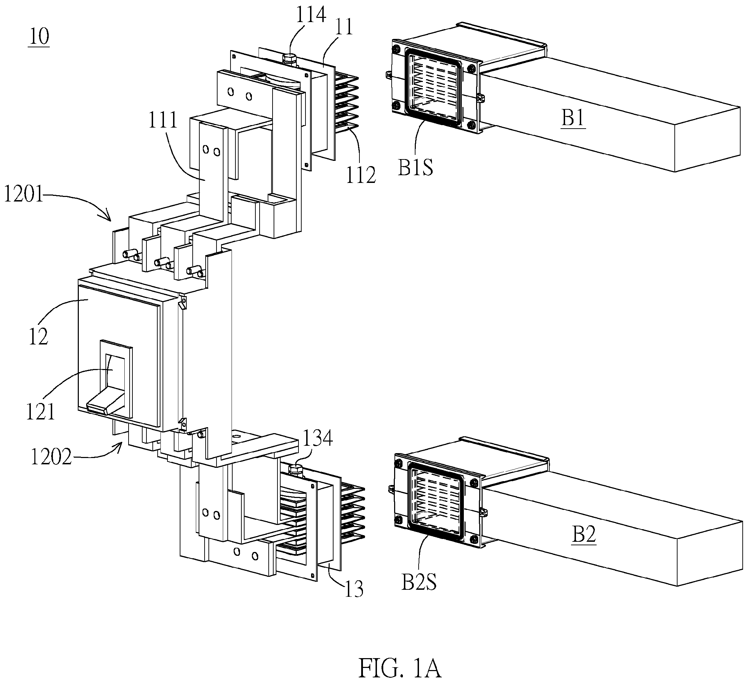

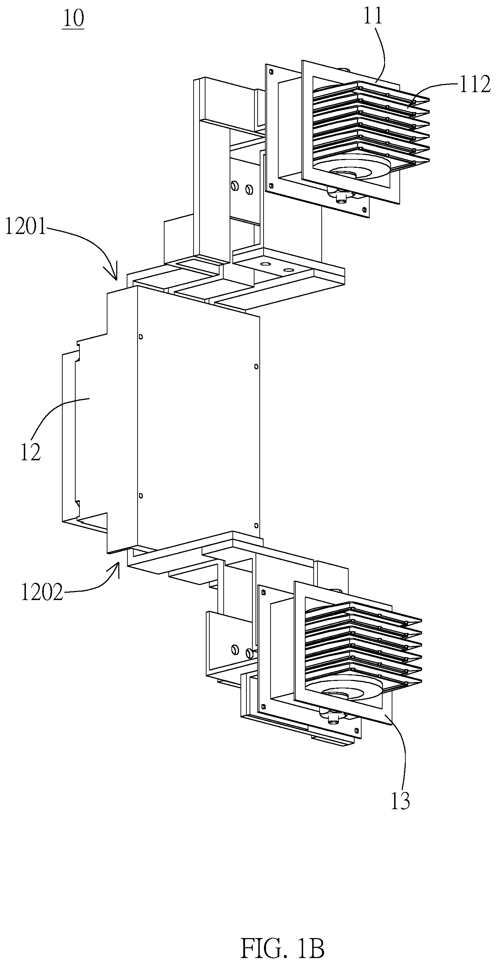

Specifically, referring to FIGs. 1A and 1B, the bridge switch 10 includes a first plug terminal 11 configured to insert into a first busbar B1, a second plug terminal 13 configured to insert into a second busbar B2 and a switch component 12. A first side 1201 of the switch component 12 is electrically coupled to the first plug terminal 11, and a second side 1202 of the switch component 12 is electrically coupled to the second plug terminal 13. Wherein the switch component 12 includes a switch unit 121 configured to control the conductivity between the first side 1201 and the second side 1202.

The first busbar B1 and/or the second busbar B2 can be any busbar used for power transmission, especially, for power transmission between equipment and power stations in a factory. For example, the first busbar B1 or the second busbar B2 can be armored busbars, molded busbars, or busbars used around chassis of a power distribution system. It should be noted that the present invention does not limit the type of the first busbar B1 or the second busbar B2.

In an embodiment, the first busbar B1 and/or the second busbar B2 is configured to have parallel conducting sheets, which have gaps formed between every two adjacent conducting sheets. The first plug terminal 11 and the second plug terminal 13 are configured to be inserted, respectively, into sockets (B1S, B2S), and be plugged into the gaps formed between each two adjacent conducting sheets. Thereby, the first plug terminal 11 and the second plug terminal 13 are electrically coupled with the conducting sheets inside the first busbar B1 and/or the second busbar B2. Taking the combination between the first plug terminal 11 and the first busbar B1 as an example, the first plug terminal 11 is electrically coupled to the conducting sheet of the first busbar B1 via the socket B1S, and fixed to the conducting sheet of the first busbar B1 by being tightly pressed or fixed with screws (such as weighing screws 114, 134) or other fixing structures. In an embodiment, the first plug terminal 11 has a weighing screw 114 configured to adjust the space formed between the conducting sheets of the first plug terminal 11. When the first plug terminal 11 is plugged into the socket B1S, the weighing screw 114 is tightened to narrow the space formed between the conducting sheets. Accordingly, the first plug terminal 11 will be tightly connected to the conducting sheet of the socket B1S. When uninstalling the first plug terminal 11, the weighing screw 114 is loosened to release the first plug terminal 11 from the socket B1S. However, the means for fixing the conducting sheet of the first busbar B1 and the first plug terminal 11 is not limited thereto. It should be noted that although the first busbar B1 and the second busbar B2 depicted in FIG.1A are arranged in parallel, the present invention is not limited to the relative position or angle between the first busbar B1 and the second busbar B2. For example, the first busbar B1 and the second busbar B2 can also be arranged at right angles, and the bridge switch 10 can be inserted onto the first busbar B1 and the second busbar B2 by changing the setting angle of the first plug terminal 11 and the second plug terminal 13, but not limited thereto.

In an embodiment, the switch component 12 has a first side 1201 for the input power supply and a second side 1202 for the output power supply. It should be noted that the first side 1201 and the second side 1202 are only relative concepts corresponding to the input or output of a power supply, respectively. The first side 1201 can also be used as the output end of a power supply, while the second side 1202 is the input end of a power supply. The first side 1201 of the switch component 12 and the first plug terminal 11 are electrically coupled through a conducting sheet 111 made of copper, aluminum, or silver. It should be noted that the first plug terminal 11 and the second plug terminal 13 only indicate that their configurations are set to be able to couple and cooperate with the first busbar B1 and the second busbar B2, and do not limit their component composition. In an embodiment, the first side 1201 of the switch component 12 may be directly plugged into the first busbar B1 through the conducting sheet 111, and the part of the conducting sheet plugged into the first busbar B1 is treated as the first plug terminal 11 of the present invention. On the other hand, in an embodiment, the conducting sheet 111 may be combined with the plug-in conducting sheet 112 that is set to be suitable for insertion onto the first busbar B1, and the plug-in conducting sheet 112 can be inserted onto the first busbar B1. In this embodiment, the plug-in conducting sheet 112 is treated as the first plug terminal 11 of the present invention. Similarly, the second plug terminal 13 can also be defined in the same way.

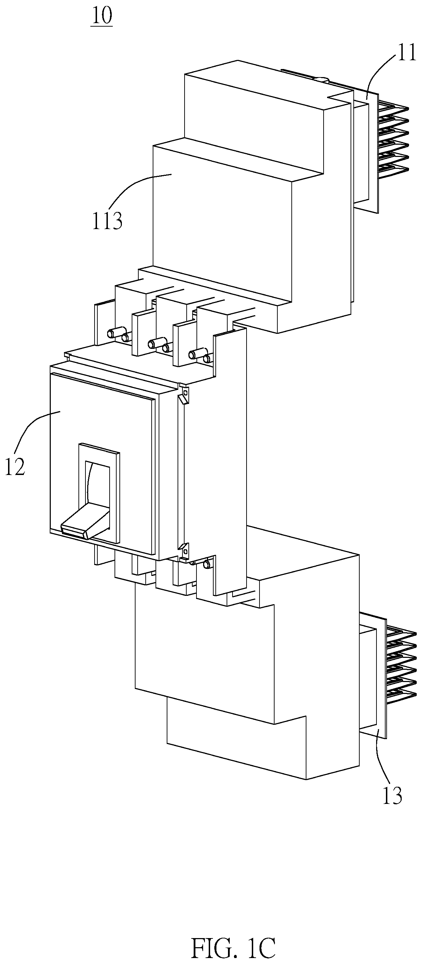

In an embodiment, referring to FIG. 1C, the conducting sheet 111 is sealed by a sealing shell 113. The sealing shell 113 provides effect such as reducing the risks of electric shock to personnel or short circuits between circuits caused by the exposure of the conducting sheet 111. In an embodiment, the sealing shell 113 is further filled with solidified fillers such as epoxy resin or silicone resin. The solidified filler will fill the gaps between each two of the conducting sheets 111 and the space between the conducting sheets 111 and the sealing shell 113. The solidified fillers serve as an insulator and rigid structure after curing. Therefore, the solidified filler inside the sealing shell 113 further provide effects such as increasing the overall waterproofing, explosion resistance, and safety of the first plug terminal 11. Similarly, the second plug terminal 13 can also be arranged in the same way.

The switch component 12 includes a switch unit 121, which is configured to switch between conductive or non-conductive states in response to a control instruction to control the electrical conductivity between the first side 1201 and the second side 1202 of the switch component 12. In an embedment, the control instruction can be provided by mechanical switching, such as by manually manipulating a switch handle, or by providing disconnection operation through structures such as springs, electromagnets, etc. In an embedment, the control instruction can also be nonmechanical. For example, the switch unit 121 can be triggered by control instructions in a non-physical means such as light, sound, or electricity. When the switch unit 121 is in the conductive state, the first side 1201 and the second side 1202 of the switch component 12 are conductive. At this point, the electrical power from the first busbar B1 can be transferred to the second busbar B2. On the contrary, when switch unit 121 is in the non-conductive state, there is no conduction between the first side 1201 and the second side 1202. At this point, the first busbar B1 and the second busbar B2 cannot be electrically coupled.

Through the above configuration, because the first plug terminal 11 and the second plug terminal 13 have sufficient safety and leakage resistance, and the switch component 12 provides an interruption node between the first plug terminal 11 and the second plug terminal 13, the first plug terminal 11 and the second plug terminal 13 are configured to allow insertion, respectively, into the first busbar B1 and the second busbar B2 when the first busbar B1 and the second busbar B2 are not powered off. In addition, the switch component 12 provides the function of a circuit breaker to improve the safety for installing the bridge switch 10 and avoid abnormal circuit states such as short circuits between the first busbar B1 and the second busbar B2 caused by operator errors. Therefore, it is possible to hot swap the bridge switch 10 without powering off the first busbar B1 and/or the second busbar B2.

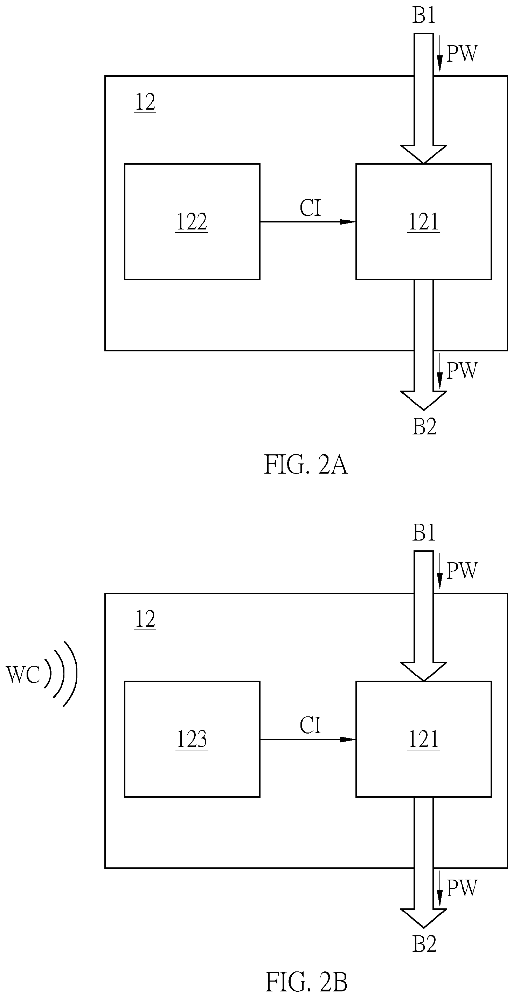

In an embodiment, referring to FIG. 2A, the switch component 12 further includes a control unit 122 which is coupled to the switch unit 121 and configured to provide a control instruction(s) CI. The control unit 122 can be any component with computational functions, such as, but not limit to, a computer, a microprocessor, or a FPGA. The control unit 121 provides the control instruction CI to the switch unit 121 to control the conducting or non-conducting state of the switch unit 121 according to instructions provided by an operator or a detected voltage value between the first plug terminal 11 and the second plug terminal 13 or a detected current value flowing through the switch unit 121.

In an embodiment, referring to FIG. 2B, the switch component 12 further includes a communication unit 123 which is coupled to the switch unit 121 and receives communication signals to provide the control instructions CI via wireless transmission WC. The communication unit 123 is a module for wireless remote communication means such as a Bluetooth receiver, an infrared receiver, or a wireless network receiver. In response to receiving communication signals from a remote end, the communication unit 123 provides the control instructions CI to the switch unit 121 to control the conduction or the non-conduction state of the switch unit 121.

The control unit 122 or the communication unit 123 provide effects such as automatic switching the switch unit 121 or remotely controlling the switch unit 121, which saves a lot of manpower or cost. It should be noted that the embodiments shown in FIGs. 2A and 2B can be implemented separately or in combination. On the other hand, the control unit 122 or the communication unit 123 does not necessarily need to be located inside the housing of the switch component 12. For example, the control unit 122 can be a computer or a center console connected to the switch unit 121 through a transmission line or wireless communication to provide control commands CI, but is not limited thereto.

In an embodiment, the switch unit 121 is an air circuit breaker (ACB) or a molded case circuit breaker (MCCB). The switch unit 121 is selected based on the amount of current transmitted between the first busbar B1 and the second busbar B2. For example, when the current is below 1600 amperes, a molded case circuit breaker can be used as the switch unit 121, and when the current is higher than 1600 amperes, an air circuit breaker can be used as the switch unit 121 to achieve better breaking effect. In addition, compared to molded case circuit breakers, air circuit breakers not only have the advantage of being operable at higher currents, but also have easier control methods such as remote or automatic operation due to their breaking principle.

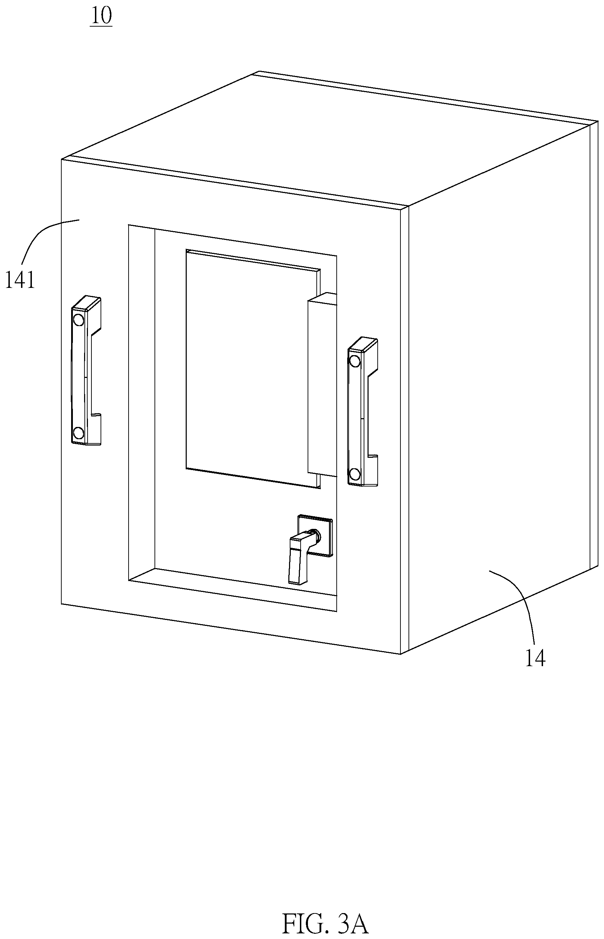

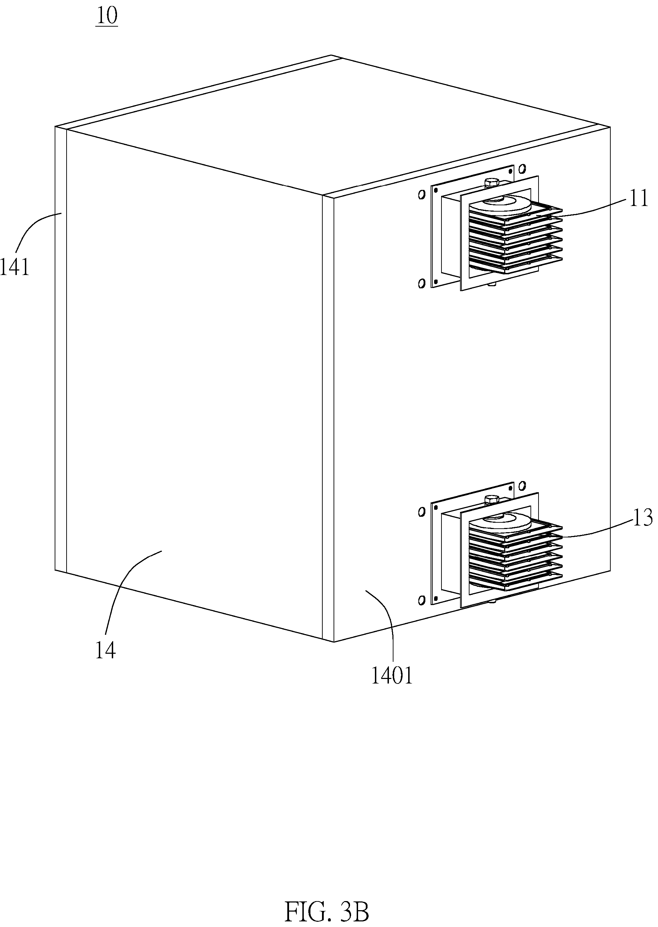

In an embodiment, referring to FIGs. 3A and 3B, the bridge switch 10 further includes a housing 14. The switch component 12 is located inside the housing 14, while the first plug terminal 11 and the second plug terminal 13 are located outside the housing 14 and on the first side 1401 of the housing 14. The housing 14 is configured to accommodate the switch component 12. The first plug terminal 11 and the second plug terminal 13 are arranged to protrude outside the housing 14. In an embodiment, the housing 14 has a door panel 141 which facilitates the operation of the switch component 12. The first side 1401 of the housing 14 has through holes corresponding to the first plug terminal 11 and the second plug terminal 13. The through holes allow the conducting sheet connected to the switch component 12 to pass through the housing 14 and be coupled to the first plug terminal 11 and the second plug terminal 13. The first side 1401 of the housing 14 is preferably selected from the side of the housing 14 opposite to the door panel 141, so that when setting the bridge switch 10 on the first busbar B1 and the second busbar B2, the switch component 12 can be directly controlled by opening/closing the door panel 141 located on the front side, but not limited thereto.

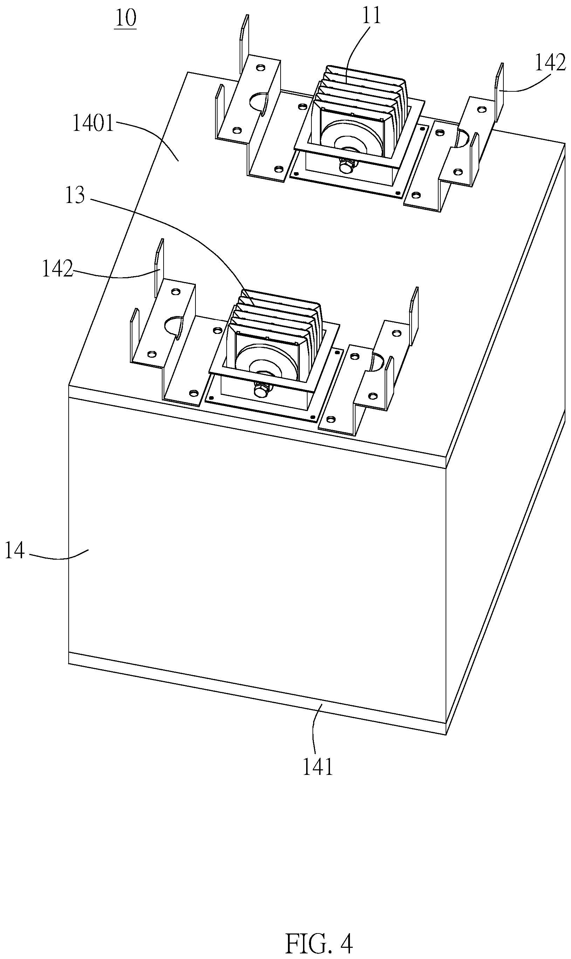

In an embodiment, referring to FIG. 4, the first surface 1401 of the housing 14 has at least one guiding installation structure 142 arranged according to the structure of the first busbar B1 or the second busbar B2. Specifically, the first surface 1401 of the housing 14 is the surface facing the first busbar B1 and/or the second busbar B2. When the bridge switch 10 is set on the first busbar B1 and/or the second busbar B2, at least one guiding installation structure 142 formed on the first surface 1401 will provide support or guide for an operator/installer along the contour or the structure of the first busbar B1 and/or the second busbar B2. Through the guidance of at least one guiding installation structure 142, the installer is helped to set the bridge switch 10 in a correct position. In an embodiment, at least one guiding installation structure 142 further has a clamping means that can be separated/connected from/to the first busbar B1 and/or the second busbar B2. In the embodiment, when the bridge switch 10 is set on the first busbar B1 and/or the second busbar B2, the clamping means of at least one guiding installation structure 142 provides stability of the connection. Accordingly, the housing 14 with the guiding installation structure 142 provides effects such as reducing the risk of the bridge switch 10 detaching from the first busbar B1 and/or the second busbar B2 due to vibrations or accidental contacts, and provides auxiliary bonding force to avoid instability or loosening caused by the bridge switch 10 relying solely on the bonding force of the first plug terminal 11 and the second plug terminal 13 inserted into the first busbar B1 and/or the second busbar B2. It should be noted that although FIG. 4 illustrates at least one guiding installation structure 142 formed on the first surface 1401, the first plug terminal 11 and the second plug terminal 13 of the present invention may be provided on the same or different surfaces of the housing 14. When the first plug terminal 11 and the second plug terminal 13 are set on different surfaces, the guiding installation structure 142 can be adjusted and set on either surface of the housing 14 according to requirements.

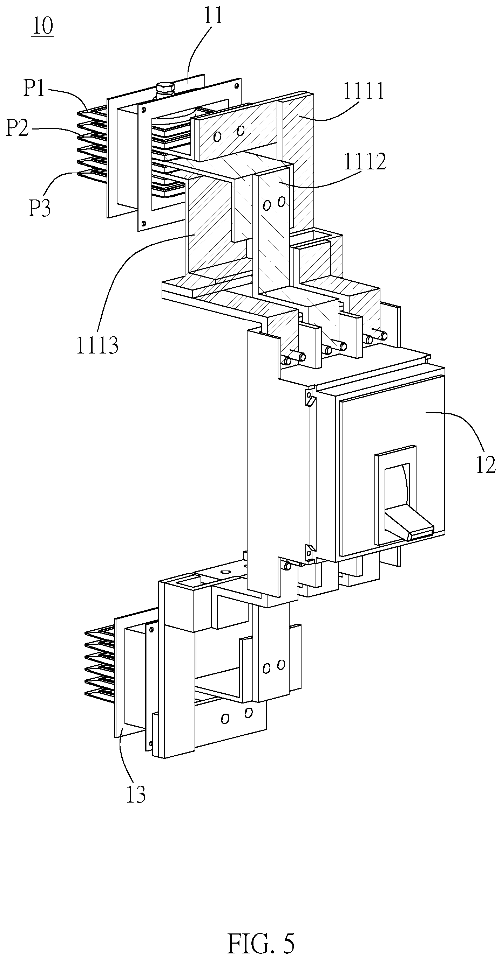

In an embodiment, referring to FIG. 5, the first plug terminal 11 has a first phase power supply terminal P1, a second phase power supply terminal P2, and a third phase power supply terminal P3. The first phase power supply terminal P1 is coupled to the switch component 12 via a first conducting path 1111, the second phase power supply terminal P2 is coupled to the switch component 12 via a second conducting path 1112, and the third phase power supply terminal P3 is coupled to the switch component 12 via a third conducting path 1113. Specifically, in the embodiment, the first busbar B1 is configured to transmit power of the same phase or different phases by adjusting the configuration of the first busbar B1. For example, the first busbar B1 is configured to provide power signal with three phases. In the example, the first busbar B1 transmits the power signal with a phase difference of 120 degrees. The first plug terminal 11 extracts power signals with different phases from the first busbar B1 through the first phase power supply terminal P1, the second phase power supply terminal P2, and the third phase power supply terminal P3. Power signals with multi-phases are transmitted to the switch component 12 through the first conducting path 1111, the second conducting path 1112, and the third conducting path 1113. Accordingly, the switch component 12 is configured to control the conduction or disconnection of the power signals with multi-phases transmitted from the first conducting path 1111, the second conducting path 1112, and the third conducting path 1113 to be transmitted to the second busbar B2. Through the configuration of the embodiment, the bridge switch 10 is able to provide different power supply for the equipment, and reduce the limitation of types of power sources.

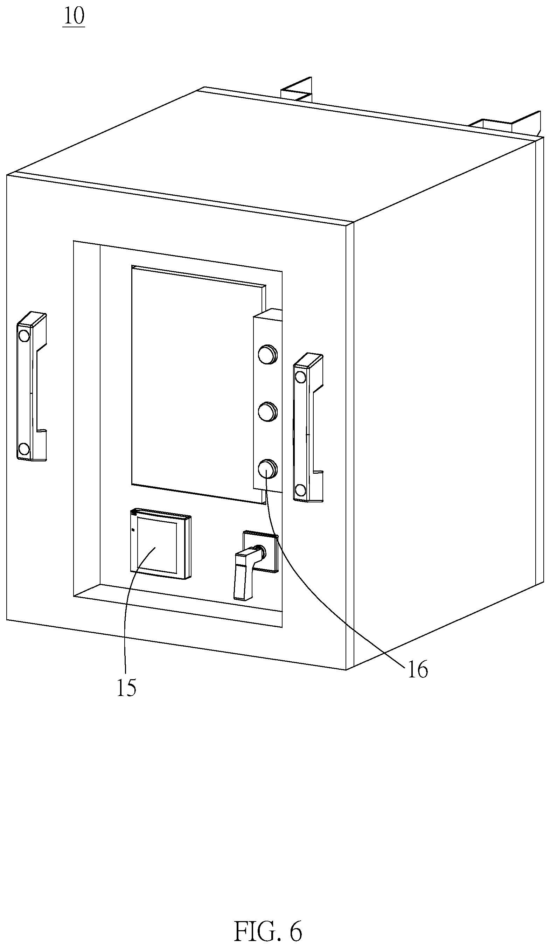

In an embodiment, referring to FIG. 6, the bridge switch 10 further includes an electric meter module 15 coupled to the switch component 12. The electric meter module 15 is configured to derive/measure the electricity data passing through the switch component 12. For example, the electric meter module 15 can be configured to read a current value, power, or other electricity parameters flowing through the switch component 12 through a comparator or other conventional means for reading power parameters. In an embodiment, the measured electricity data is displayed through a monitor or other means. In an embodiment, the bridge switch 10 further includes at least one indicator module 16 coupled to the switch component 12. The indicator module 16 is configured to indicate whether the switch component 12 receives power from the first busbar B1 through the first plug terminal 11, but not limited thereto. In an embodiment, the indicator module 16 is selected from optical signal, acoustic signal, or other conventional means for indicating or warning to provide power status of the switch component 12 to an operator.

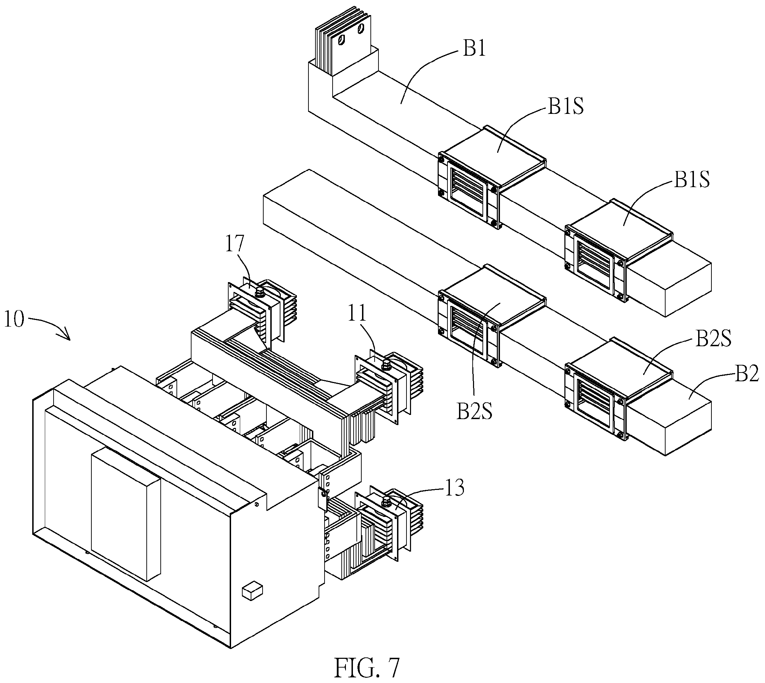

In an embodiment, referring to FIG.7, the bridge switch 10 further includes a third plug terminal 17. The third plug terminal 17 is used as an additional first plug terminal 11. In the embodiment, the first busbar B1 is configured to set an additional first socket to correspond to the third plug terminal 17. Similarly, a fourth plug terminal (not shown in FIG. 7) may be used as an additional second plug terminal 13, and the second busbar B2 is also configured to set an additional second socket to correspond to the fourth plug terminal. It should be noted that the illustration in FIG.7 is only an example and is not intended to limit the number of the plug terminals and sockets in the embodiment. In the embodiment, the current capacity that the first plug terminal 11 can withstand or accept can be correspondingly increased, thereby achieving the goal of increasing the current capacity of the bridge switch 10 (high-capacity bridge switch).

By connecting two or more busbars through the bridge switch of the presented invention, it is possible to quickly and safely connect two or more sets of busbars. And the bridge switch can also be used as a circuit breaker or circuit interruption node, allowing the busbar to set interruption points or safety nodes during power transmission to improve the overall safety of the circuit transmission, further protecting the equipment connected to the busbar.

The aforementioned description of the present invention is provided to enable a person of ordinary skill in the art to make or implement the present invention. Various modifications to the present invention will be apparent to a person skilled in the art, and the general principles defined herein can be applied to other variations without departing from the spirit or scope of the present invention. Therefore, the present invention is not intended to be limited to the examples described herein, but is to be in accord with the widest scope consistent with the principles and novel features of the invention herein.

## Claims

1. A bridge switch (10), comprising:
a first plug terminal (11) configured to insert in a first busbar (B1);
a second plug terminal (13) configured to insert in a second busbar (B2); and
a switch component (12) having a first side (1201) electrically coupled to the first plug terminal (11), and a second side (1202) electrically coupled to the second plug terminal (13);
wherein the switch component (12) includes a switch unit (121) configured to control electrical conductivity between the first side (1201) and the second side (1202).

2. The bridge switch (10) of claim 1, wherein to control electrical conductivity between the first side (1201) and the second side (1202), the switch unit (121) is further configured to switch between a conductive state and a non-conductive state based on a control instruction (CI).

3. The bridge switch (10) of claim 2, wherein the switch component (12) further includes a control unit (122) electrically coupled to the switch unit (121) and configured to provide the control instruction (CI); or
wherein the switch component (12) further includes a communication unit (123) coupled to the switch unit (121) and configured to provide the control instruction (CI) through a wireless communication.

4. The bridge switch (10) of claim 1, wherein the switch unit (121) is selected from an air circuit breaker (ACB) or a molded case circuit breaker (MCCB).

5. The bridge switch (10) of claim 1, further comprising a housing (14); wherein the switch component (12) is arranged in the housing (14), and the first plug terminal (11) and the second plug terminal (13) are arranged outside a first surface (1401) of the housing (14).

6. The bridge switch (10) of claim 5, wherein at least one guiding installation structure (142) corresponding to the first busbar (B1) or the second busbar (B2) is formed on the first surface (1401).

7. The bridge switch (10) of claim 1, wherein the first plug terminal (11) has a first phase power supply terminal (P1), a second phase power supply terminal (P2) and a third phase power supply terminal (P3); wherein the first phase power supply terminal (P1) is electrically coupled to the switch component (12) through a first conducting path (1111), the second phase power supply terminal (P2) is electrically coupled to the switch component (12) through a second conducting path (1112), and the third phase power supply terminal (P3) is electrically coupled to the switch component (12) through a third conducting path (1113).

8. The bridge switch (10) of claim 1, further comprising an electric meter module (15) electrically coupled to the switch component (12), and configured to present a power information of the switch component (12).

9. The bridge switch (10) of claim 1, further comprising at least one indicator module (16) electrically coupled to the switch component (12), and configured to indicate whether the switch component (12) received power from the first busbar (B1).

10. The bridge switch (10) of claim 1, wherein the first plug terminal (11) is coupled to the first side (1201) of the switch component (12) through at least one conducting sheet (111).

11. The bridge switch (10) of claim 10, further comprising a sealing shell (113) configured to cover the at least one conducting sheet (111).

12. The bridge switch (10) of claim 11, wherein a solidified filler is arranged between the sealing shell (113) and the at least one conducting sheet (111).

13. The bridge switch (10) of claim 1, further comprising a third plug terminal (17) electrically coupled to the first side (1201) of the switch component (12), and configured insert in the first busbar (B1).

14. The bridge switch (10) of claim 1, wherein the first plug terminal (11) is configured to insert to the first busbar (B1) without powered off the first busbar (B1).

15. The bridge switch (10) of claim 1, wherein the first plug terminal (11) has a weighing screw (114) configured to adjust a spacing between the first plug terminal (11) and the conducting sheet (111).
